# EUROPÄISCHE PATENTSCHRIFT

(11) **EP 3 008 137 B1**
(45) Veröffentlichungstag und Bekanntmachung des Hinweises auf die Patenterteilung: **14.08.2019**
(21) Anmeldenummer: 14729337.7
(22) Anmeldetag: 11.06.2014
(51) Int. Cl.: C09D 4/06, C09D 133/00, C09D 5/00, C09D 7/00

(54) **STRAHLUNGSHÄRTBARES BESCHICHTUNGSMITTEL**
RADIATION-CURABLE COATING COMPOSITION
AGENT DE REVÊTEMENT DURCISSABLE PAR RAYONNEMENT

(30) Priorität: 14.06.2013 EP 13172188
(43) Veröffentlichungstag der Anmeldung: 20.04.2016
(73) Patentinhaber: Covestro Deutschland AG, 51373 Leverkusen (DE)
(72) Erfinder: KOSTROMINE, Serguei, 53913 Swisttal (DE); PETZOLDT, Joachim, 40789 Monheim (DE); HOVESTADT, Wieland, 42799 Leichlingen (DE); KOCH, Eberhard, 51399 Burscheid (DE); KÜNZEL, Roland, 51381 Leverkusen (DE)
(74) Vertreter: Levpat
(86) Internationale Anmeldenummer: PCT/EP2014/062086
(87) Internationale Veröffentlichungsnummer: WO 2014/198751

(56) Entgegenhaltungen:
- US-A1- 2004 192 804
- US-A1- 2008 135 171
- US-A1- 2009 163 614
- US-A1- 2011 171 476
- US-B1- 6 613 857

## Beschreibung

Die vorliegende Erfindung betrifft ein strahlungshärtbares Beschichtungsmittel, umfassend mindestens ein thermoplastisches Polymer, einen Reaktivverdünner, einen Fotoinitiator und mindestens ein organisches Lösungsmittel, wobei das Mittel einen bestimmten Anteil an ethylenisch ungesättigten Gruppen aufweist, sowie ein Verfahren zur Herstellung derselben. Sie betrifft weiterhin ein Verfahren zur Herstellung einer Schutzschicht sowie damit hergestellte beschichtete Substrate, insbesondere Folien.

Es sind Verfahren bekannt, bei denen zunächst eine Kunststofffolie mittels gängiger Lackierverfahren wie Rakeln, Gießen oder Spritzen großflächig beschichtet wird und diese Beschichtung durch physikalische Trocknung oder Teilhärtung nahezu klebfrei antrocknet. Diese Folie kann dann bei erhöhten Temperaturen verformt und anschließend verklebt, hinterspritzt oder hinterschäumt werden. Dieses Konzept bietet viel Potential für die Herstellung zum Beispiel von Kunststoffbauteilen, wobei der aufwendigere Lackierschritt dreidimensionaler Bauteile durch die einfachere Beschichtung eines flächigen Substrats ersetzt werden kann.

In aller Regel setzen gute Oberflächeneigenschaften eine hohe Vernetzungsdichte der Beschichtung voraus. Hohe Vernetzungsdichten führen aber zu duromerem Verhalten mit maximal möglichen Verstreckungsgraden von nur wenigen Prozent, so dass die Beschichtung während des Verformvorganges zur Rissbildung neigt. Dieser offensichtliche Konflikt zwischen erforderlicher hoher Vernetzungsdichte und angestrebtem hohen Verstreckungsgrad kann gelöst werden, zum Beispiel indem die Trocknung/Härtung der Beschichtung in zwei Schritten, vor und nach der Verformung, durchgeführt wird. Insbesondere geeignet für eine Nachhärtung ist eine strahlungsinduzierte Vernetzungsreaktion in der Beschichtung.

Die Beschichtung soll dabei nach erfolgter Härtung die Eigenschaften einer Schutzschicht aufweisen, d.h. sie soll möglichst hart und kratzfest, licht-, wasser-, und lösemittelbeständig sowie schlagzäh sein. Die gewünschte Qualität hinsichtlich optischer und haptischer Eigenschaften soll ebenfalls gewährleistet sein.

Darüber hinaus ist für eine wirtschaftliche Anwendung dieses Verfahrens das zwischenzeitliche Aufwickeln der beschichteten, verformbaren Folie auf Rollen notwendig. Die dabei in den Rollen auftretenden Druck- und Temperaturbelastungen, stellen besondere Anforderungen an die Blockfestigkeit der aufgetragenen und getrockneten, aber noch nicht vollständig gehärteten Beschichtung.

US 2009/0163614 A1 Offenbart eine Beschichtungszusammensetzung, die ein thermoplastisches Harz umfasst, wobei das thermoplastische Harz ausgewählt ist aus der Gruppe bestehend aus Polycycloolefinharzen, Polyesterharzen, Polyacrylatharzen und deren Mischungen und einer strahlenhärtbaren Beschichtungszusammensetzung.

WO 2004/011559 A1 offenbart Beschichtungszusammensetzungen, die Acrylatcopolymere, Fotoinitiatoren und mindestens ein multifunktionelles Methacrylat umfasst. Diese Beschichtungszusammensetzungen werden als drucksensitive Klebeschichten verwendet.

WO 03/010602 A1 offenbart strahlenhärtbare Beschichtungszusammensetzungen umfassend ein Oligomer oder Polymer mit mindestens einer Carboxylgruppe im Molekül und einer Molmasse von weniger als 200.000, vorzugsweise 2.000 bis 150.000, besonders bevorzugt von 2.000 bis 100.000 und insbesondere von 5.000 bis 100.000, einem speziellen Fotoinitiator und monomeren, oligomeren oder polymeren Verbindungen mit mindestens einer olefinschen Doppelbindung.

Thermisch verformbare und danach UV-härtende Beschichtungen sind im Stand der Technik beispielsweise beschrieben in Beck, Erich (BASF), Scratch resistant UV coatings for automotive applications, Pitture e Vernici, European Coatings (2006), 82(9), 10-19; Beck, Erich, Into the third dimension: three ways to apply UV coating technology to 3D-automotive objects, European Coatings Journal (2006), (4), 32, 34, 36, 38-39; Petzoldt, Joachim; Coloma, Fermín (BMS), New three-dimensionally formable hardcoat films, JOT, Journal fuer Oberflaechentechnik (2010), 50(9), 40-42 und Petzoldt et al., Development of new generation hardcoated films for complex 3D-shaped FIM applications, RadTech Asia 2011, Conference Proceedings.

Die meisten davon basieren auf sogenannten Makromonomeren, die hauptsächlich durch Dual-Cure-Verfahren hergestellt werden. Thermoplastische Makromonomere bilden sich durch einen ersten Härtungsmechanismus (z.B. PUR, Polyaddition), die davon nicht betroffenen und durch UV-Licht härtenden Gruppen (z.B. Acrylate), die als End- oder Seitensubstituenten angebracht sind, zeigen sich nach der Verformung beim zweiten Härtungsschritt. Nachteilig ist dabei allerdings, dass solche Makromonomere selbst, oder die Komponenten dafür speziell synthetisch angefertigt werden müssen, was in der Herstellung zusätzliche Kosten verursacht. Durch Dual-Cure-Verfahren erhältliche Makromonomere sind beispielsweise in der EP 2 113 527 A1 beschrieben.

WO 2005/080484 A1 beschreibt eine strahlungshärtbare Verbundschichtplatte oder -folie aus mindestens einer Substratschicht und einer Deckschicht, die eine strahlungshärtbare Masse mit einer Glasübergangstemperatur unter 50 °C mit hoher Doppelbindungsdichte enthält.

WO 2005/118689 A1 offenbart eine analoge Verbundschichtplatte oder -folie, bei der die strahlungshärtbare Masse zusätzlich Säuregruppen enthält. Beide Anmeldungen beschreiben die Deckschicht als nicht klebend, eine höhere Blockfestigkeit, wie zum Beispiel für das Aufrollen der Folie um einen Kern benötigt wird, wird nicht erreicht. Die Möglichkeit, die Verbundfolien vor der Strahlungshärtung der Deckschicht zu Rollen aufzuwickeln, wird daher auch nicht erwähnt.

Im Stand der Technik besteht folglich weiterhin der Bedarf an verbesserten oder zumindest alternativen strahlungshärtenden Beschichtungen. Wünschenswert wären solche Beschichtungen, bei denen die Beschichtung beispielsweise auf Folien nach dem Verformen und Härten eine hohe Abriebbeständigkeit, Kratzfestigkeit und Lösungsmittelbeständigkeit bei gleichzeitig guter Haftung auf der Folie zeigt. Zusätzlich dazu wären verbesserte oder zumindest alternative Beschichtungen wünschenswert, bei der die Beschichtung vor dem Verformen eine so hohe Blockfestigkeit aufweist, dass sich die damit beschichtete Folien problemlos aufrollen lassen, sich aber trotzdem hohe Verstreckungsgrade im Verformungsprozess erzielen lassen. Ein weiterer wichtiger Gesichtspunkt betrifft die Wirtschaftlichkeit solcher Beschichtungssysteme. Üblicherweise werden die Makromonomere oder deren Komponenten für solche Beschichtungssysteme speziell synthetisch angefertigt, was in der Herstellung naturgemäß höhere Kosten verursacht. Es wäre daher des Weiteren wünschenswert, das Beschichtungssystem auf möglichst einfache und effiziente Weise herstellbar auszugestalten. Damit besteht im Stand der Technik ein Bedarf an Beschichtungsmitteln, die zum einen einfach, effizient und damit günstig herzustellen sind, und die zum anderen zu Beschichtungen, insbesondere auf Folien führen, die nach dem Auftragen und Trocknen blockfest und nach dem Härten eine hohe Abriebbeständigkeit, Kratzfestigkeit und Lösemittelbeständigkeit aufweisen.

Das Bereitstellen solcher Beschichtungsmittel und damit beschichteter Substrate mit dem beschriebenen Eigenschaftsprofil stellt für den Fachmann eine besondere Herausforderung dar.

Die vorliegende Erfindung stellt daher folgendes bereit: Ein Beschichtungsmittel, umfassend
(a) mindestens ein thermoplastisches Polymer mit einem mittleren Molgewicht Mw von mindestens 100.000 g/mol in einem Gehalt von mindestens 30 Gew.-% des Festanteils des Beschichtungsmittels;
(b) mindestens einen UV-härtbaren Reaktivverdünner in einem Gehalt von mindestens 30 Gew.-% des Festanteils des Beschichtungsmittels;
(c) mindestens einen Fotoinitiator in einem Gehalt von ≥ 0,1 bis ≤ 10 Gewichtsteilen des Festanteils des Beschichtungsmittels; und
(d) mindestens ein organisches Lösungsmittel,
wobei der Anteil an ethylenisch ungesättigten Gruppen mindestens 3 mol pro kg des Festanteils des Beschichtungsmittels beträgt.

Das erfindungsgemäße Beschichtungsmittel zeichnet sich nach dem Auftragen auf ein Substrat wie beispielsweise einer Folie und erfolgter Trocknung durch eine gute Blockfestigkeit und nach dem Härten durch aktinische Strahlung durch eine ebenfalls gute Lösungsmittelbeständigkeit, Kratzfestigkeit und Abriebbeständigkeit aus.

Thermoplastische Polymere haben sich als besonders vorteilhaft für die Endeigenschaften der Beschichtung gemäß der vorliegenden Erfindung herausgestellt. Thermoplastische Polymere im Sinne der vorliegenden Erfindung sind in einer bevorzugten Ausführungsform daher lineare thermoplastische Polymere. Bevorzugt sind dabei insbesondere Polymethylmethacrylat (PMMA), Polyester verschiedener Art (z.B. PET, PEN, PBTP und UP), andere Kunststoffe, wie Hart-PVC, Celluloseester (wie CA, CAB, CP), Polystyrol (PS) und Copolymere (SAN, SB und MBS), Polyacrylnitril (PAN), ABS-Kunststoffe, Acrylnitrilmethylmethacrylat (AMMA), Acrylnitril-Styrol-Acrylester (ASA), Polyurethan (PUR), Polyethylen (PE, PE-HD, -LD, -LLD, -C), Polypropylen (PP), Polyamid (PA), Polycarbonat (PC) oder Polyethersulfon (PES). Die Kurzbezeichnungen sind in DIN 7728T1 definiert.

Die Vicaterweichungstemperaturen VET (ISO 306-650) liegen in einer weiteren bevorzugten Ausführungsform der vorliegenden Erfindung im Bereich von mindestens 90°C, bevorzugt mindestens 95°C, besonders bevorzugt mindestens 100°C.

Vorteilhaft ist Polymethylmethacrylat.

Unter Polymethylmethacrylat (PMMA) versteht man insbesondere Polymethylmethacrylat-Homopolymer und Copolymere auf Methylmethacrylat-Basis mit dem Methylmethacrylat-Anteil von mehr als 70 Gew. %. Solche Polymethylmethacrylate sind beispielsweise unter den Handelsnamen *Degalan*®*, Degacryl*®*, Plexyglas*®*, Acrylite*® (Fa. Evonik), *Altuglas, Oroglas* (Fa. Arkema), *Flvacite*®*, Colacryl*®*, Lucite*® (Fa. Lucite) und u.a. unter Namen *Acrylglas, Conacryl, Deglas, Diakon, Friacryl, Hesaglas, Limacryl, PerClax* und *Vitroflex* erhältlich.

Bevorzugt sind in einer weiteren vorteilhaften Ausführungsform PMMA-Homopolymere und/oder Copolymere aus 70 Gew.-% bis 99,5 Gew.-% Methylmethacrylat und 0,5 Gew.-% bis 30 Gew.-% Methylacrylat. Besonders bevorzugt sind PMMA-Homopolymere und Copolymere aus 90 Gew.-% bis 99,5 Gew.-% Methylmethacrylat und 0,5 Gew.-% bis 10 Gew.-% Methylacrylat. Die Vicaterweichungstemperaturen VET (ISO 306) können im Bereich von mindestens 90°C, bevorzugt von ≥ 100°C bis ≤ 115°C liegen.

Besonders bevorzugt sind PMMA-Homopolymere und Copolymere mit einem Molekulargewicht Mw von über 150.000 und ganz besonders bevorzugt mit einem Molekulargewicht Mw über 200.000.

Die Bestimmung des Molekulargewichts Mw kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Das Polymer ist ein wesentlicher Teil des erfindungsgemäßen Beschichtungsmittels und der erfindungsgemäßen Beschichtung. Der Anteil des linearen thermoplastischen Polymers beträgt im Festanteil des Beschichtungsmittels mindestens 30 Gew.-%. Besonders bevorzugt sind 40 Gew.-%, ganz besonders bevorzugt sind 45 Gew.-%

Als Komponente (b) des erfindungsgemäßen Beschichtungsmittel sind als Reaktivverdünner bifunktionelle, trifunktionelle, tetrafunktionelle, pentafunktionelle oder hexafunktionelle Acryl- und/oder Methacrylmonomere bevorzugt einsetzbar. Vorzugsweise handelt es sich um Esterfunktionen, insbesondere Acrylesterfunktionen. Geeignete mehrfunktionelle Acryl- und/oder Methacrylsäureester leiten sich von aliphatischen Polyhydroxyverbindungen mit wenigstens 2, vorzugsweise wenigstens 3 und besonders bevorzugt wenigstens 4 Hydroxygruppen und vorzugsweise 2 bis 12 Kohlenstoffatomen ab.

Beispiele solcher aliphatischen Polyhydroxyverbindungen sind Ethylenglykol, Propylenglykol, Butandiol-1,4, Hexandiol-1,6, Diethylenglykol, Triethylenglykol, Glycerin, Trimethylolpropan, Pentaerythrit, Dipentaerythrit, Tetramethylolethan und Sorbitan. Beispiele für sich als bi- bis hexafunktionelle Acryl- und/oder Methacrylmonomere zum Reaktivverdünner erfindungsgemäß bevorzugt eignende Ester der genannten Polyhydroxyverbindungen sind Glykoldiacrylat und - dimethacrylat, Butandioldiacrylat oder -dimethacrylat, Dimethylolpropandiacrylat oder - dimethacrylat, Diethylenglykoldiacrylat oder -dimethacrylat, Divinylbenzol, Trimethylolpropantriacrylat oder -trimethacrylat, Glycerintriacrylat oder -trimethacrylat, Pentaerythrittetraacrylat oder -tetramethacrylat, Dipentaerythritpenta/hexaacrylat (DPHA), 1,2,3,4-Butantetraoltetraacrylat oder - tetramethacrylat, Tetramethylolethantetraacrylat oder -tetramethacrylat, 2,2-Dihydroxy-propandiol-1,3-tetraacrylat oder -tetramethacrylat, Diurethandimethacrylat (UDMA), Sorbitan-tetra-, -penta- oder -hexa-acrylat oder die entsprechenden Methacrylate. Es können auch Gemische von vernetzenden Monomeren mit zwei bis vier oder mehr ethylenisch ungesättigten, radikalisch polymerisierbaren Gruppen mitverwendet werden.

Weiter erfindungsgemäß als Reaktivverdünner bzw. als Komponente b) des erfindungsgemäßen Beschichtungsmittels können alkoxylierte Di-, Tri-, Tetra-, Penta- und Hexacrylate oder - methacrylate verwendet werden. Beispiele für alkoxylierte Diacrylate oder -methacrylate sind alkoxyliertes, bevorzugt ethoxyliertes Methandioldiacrylat, Methandioldimethacrylat, Glycerindiacrylat, Glycerindimethacrylat, Neopentylglycoldiacrylat, Neopentylglycoldimethacrylat, 2-Butyl-2-Ethyl-1,3-Propandioldiacrylate, 2-Butyl-2-Ethyl-1,3-Propandioldimethacrylat, Trimethylolpropandiacrylat oder Trimethylolpropandimethacrylat. Beispiele für alkoxylierte Triacrylate oder -methacrylate sind alkoxyliertes, bevorzugt ethoxyliertes Pentaerythrit-Triacrylat, Pentaerythrit-Trimethacrylat, Glycerintriacrylat, Glycerintrimethacrylat, 1,2,4-Butantrioltriacrylat, 1,2,4-Butantrioltrimethacrylat, Trimethylolpropantriacrylat, Trimethylolpropantrimethacrylat, Tricyclodecandimethanoldiacrylat, Tricyclodecandimethanoldimethacrylat, Ditrimethylolpropantetraacrylat oder Ditrimethylolpropantetramethacrylat.

Beispiele für alkoxylierte Tetra-, Penta- oder Hexaacrylate sind alkoxyliertes, bevorzugt ethoxyliertes Pentaerythrittetraacrylat, Dipentaerythrittetraacrylat, Dipentaerythritpentaacrylat Dipentaerythrithexaacrylat, Pentaerythrittetramethacrylat, Dipentaerythrittetramethacrylat, Dipentaerythritpentamethacrylat oder Dipentaerythrithexamethacrylat.

In den alkoxylierten Diacrylaten oder -methacrylaten, Triacrylaten oder -methacrylaten, Tetraacrylaten oder -methacrylaten, Pentaacrylaten oder -methacrylaten und/oder alkoxylierten Hexaacrylaten oder -methacrylaten der Komponente b) können alle Acrylatgruppen oder Methacrylatgruppen oder nur ein Teil der Acrylatgruppen oder Methacrylatgruppen im jeweiligen Monomer über Alkylenoxidgruppen an den entsprechenden Rest gebunden sein. Es können auch beliebige Mischungen solcher ganz oder teilweise alkoxylierten Di-, Tri-, Tetra-, Penta- oder Hexaacrylate bzw. -methacrylate eingesetzt werden. Dabei ist es auch möglich, das die Acrylat- oder Methacrylatgruppe(n) über mehrere aufeinanderfolgende Alkylenoxidgruppen, vorzugsweise Ethylenoxidgruppen an den aliphatischen, cycloaliphatischen oder aromatischen Rest des Monomeren gebunden sind. Die mittlere Anzahl der Alkylenoxid- bzw Ethylenoxidgruppen im Monomer wird durch den Alkoxylierungsgrad bzw. Ethoxylierungsgrad angegeben. Der Alkoxylierungsgrad bzw. Ethoxylierungsgrad kann bevorzugt von 2 bis 25 betragen, besonders bevorzugt sind Alkoxylierungsgrade bzw. Ethoxylierungsgrade von 2 bis 15, ganz besonders bevorzugt von 3 bis 9.

Ebenso erfindungsgemäß als Reaktivverdünner bzw. als Komponente b) des erfindungsgemäßen Beschichtungsmittels können Oligomere dienen, die zur Klasse der aliphatischen Urethanacrylate beziehungsweise der Polyesteracrylate oder Polyacrylacrylate gehören. Deren Verwendung als Lackbindemittel ist bekannt und ist in Chemistry & Technology of UV & EB Formulation for Coatings, Inks & Paints, Vol. 2, 1991, SITA Technology, London (P.K.T: Oldring (Ed.) auf S.73-123 (Urethane Acrylates) bzw. S.123-135 (Polyester Acrylates) beschrieben. Kommerziell erhältlich und geeignet im erfindungsgemäßen Sinne sind hier beispielsweise aliphatische Urethanacrylate wie Ebecryl® 4858, Ebecryl® 284, Ebecryl® 265, Ebecryl® 264, Ebecryl® 8465, Ebecryl® 8402 (Hersteller jeweils Cytec Surface Specialities), Craynor® 925 von Cray Valley, Viaktin® 6160 von Vianova Resin, Desmolux VP LS 2265 von Bayer MaterialScience AG, Photomer 6891 von Cognis oder auch in Reaktivverdünnern gelöste aliphatische Urethanacrylate wie Laromer® 8987 (70%ig in Hexandioldiacrylat) von BASF AG, Desmolux U 680 H (80%ig in Hexandioldiacrylat) von Bayer MaterialScience AG, Craynor® 945B85 (85% in Hexandioldiacrylat), Ebecryl® 294/25HD (75% in Hexandioldiacrylat), Ebecryl® 8405 (80% in Hexandioldiacrylat), Ebecryl® 4820 (65% in Hexandioldiacrylat) (Hersteller jeweils Cytec Surface Specialities) und Craynor® 963B80 (80% in Hexandioldiacrylat) jeweils von Cray Valley oder auch Polyesteracrylate wie Ebecryl® 810, 830 oder Polyacrylacrylate wie Ebecryl®, 740, 745, 767 oder 1200 von Cytec Surface Specialities.

In einer weiteren bevorzugten Ausführungsform umfasst der Reaktivverdünner (b) alkoxylierte Diacrylate und/oder Dimethacrylate, alkoxylierte Triacrylate und/oder Trimethacrylate, alkoxylierte Tetraacrylate und/oder Tetramethacrylate, alkoxylierte Pentaaacrylate und/oder Pentamethacrylate, alkoxylierte Hexaacrylate und/oder Hexamethacrylate, aliphatische Urethanacrylate, Polyesteracrylate, Polyacrylacrylate und Gemische davon.

Auch erfindungsgemäß sind Gemische solch vernetzender multifunktioneller Monomere und monofunktioneller Monomere (wie z.B Methylmethacrylat). Der Anteil der multifunktionellen Monomere in einem solchen Gemisch soll nicht unter 20 Gew.-% liegen.

Die Komponente (b) ist ein wesentlicher Teil des erfindungsgemäßen Beschichtungsmittels und der erfindungsgemäßen Beschichtung. Der Anteil der Komponente (b) insgesamt beträgt im Festanteil des Beschichtungsmittels mindestens 30 Gew.-%. Besonders bevorzugt sind 40 Gew.-%, ganz besonders bevorzugt sind 45 Gew.-%

Der Gehalt an ethylenisch ungesättigten Gruppen hat wesentlichen Einfluss auf die erreichbaren Beständigkeitseigenschaften der mit Strahlung gehärteten Beschichtung. Daher enthält das erfindungsgemäße Beschichtungsmittel einen Gehalt an ethylenisch ungesättigten Gruppen von mindestens 3,0 mol pro kg Festgehalt des Beschichtungsmittels, bevorzugt mindestens 3,5 mol pro kg, besonders bevorzugt mindestens 4,0 mol pro kg Festgehalt des Beschichtungsmittels. Dieser Gehalt an ethylenisch ungesättigten Gruppen ist dem Fachmann auch unter dem Begriff der Doppelbindungsdichte wohlbekannt.

Unter den Fotoinitiatoren der vorliegenden Erfindung versteht man die gängigen, kommerziell erhältlichen Verbindungen wie z. B. α-Hydroxyketone, Benzophenon, α,α-Diethoxyacetophenon, 4,4-Diethylaminobenzophenon, 2,2-Dimethoxy-2-phenylacetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Methyl-o-benzoylbenzoat, Benzoin, Benzoinethylether, Benzoinisopropylether, Benzoinisobutylether, 2-Hydroxy-2-methyl-1-phenylpropan-1-on, 2-Isopropylthioxanthon, Dibenzosuberon, 2,4,6-Trimethylbenzoyldiphenylphosphinoxid, Bisacylphosphinoxid und andere, wobei die genannten Fotoinitiatoren allein oder in Kombination von zwei oder mehreren oder in Kombination mit einem der obigen Polymerisationsinitiatoren benutzt werden können.

Als UV-Fotoinitiatoren werden beispielsweise die IRGACURE®-Typen von BASF eingesetzt, so beispielsweise die Typen IRGACURE® 184, IRGACURE® 500, IRGACURE® 1173, IRGACURE®2959, IRGACURE® 745, IRGACURE® 651, IRGACURE® 369, IRGACURE® 907, IRGACURE® 1000, IRGACURE® 1300, IRGACURE® 819, IRGACURE® 819DW, IRGACURE® 2022, IRGACURE® 2100, IRGACURE® 784, IRGACURE® 250, ferner werden die DAROCUR®-Typen von BASF eingesetzt, so beispielsweise die Typen DAROCUR® MBF, DAROCUR® 1173, DAROCUR® TPO, DAROCUR® 4265 eingesetzt. U.a. werden die weiteren UV-Photoinitiatoren eingesetzt, z.B. Esacure One (Fa. Lamberti).

Fotoinitiatoren sind mit im Bereich von ≥ 0,1 bis ≤ 10 Gewichtsteilen des Feststoffgehaltes des Beschichtungsmittels im Beschichtungsmittel enthalten.

Das Beschichtungsmittel enthält zudem über den Festanteil der 100 Gew.-Teile der Komponenten a) bis c) hinaus ein oder mehrere organische Lösungsmittel. Solche organischen Lösungsmittel können beispielsweise ausgewählt sein aus der Gruppe enthaltend aromatische Lösemittel, wie z.B. Xylol oder Toluol, Ketone, wie z.B. Aceton, 2-Butanon, Methyl-isobutylketon, Diacetonalkohol, Alkohole, wie z.B. Methanol, Ethanol, i-Propanol, Butanol,1-Methoxy-2-propanol, Ether, wie z.B. 1,4-Dioxan, Ethylenglykol-n-propylether, oder Ester, wie z.B. Essigsäureethylester, Essigsäurebutylester, 1-Methoxy-2-propylacetat oder Mischungen enthaltend diese Lösemittel.

Bevorzugt sind Ethanol, i-Propanol, Butanol, Essigsäureethylester, Essigsäurebutylester, 1-Methoxy-2-propanol, Diacetonalkohol, Xylol oder Toluol sowie Gemische davon. Besonders bevorzugt sind i-Propanol, Butanol, Essigsäureethylester, Essigsäurebutylester, 1-Methoxy-2-propanol, Diacetonalkohol und deren Gemische. Ganz besonders bevorzugt sind 1-Methoxy-2-propanol und Diacetonalkohol, insbesondere 1-Methoxy-2-propanol.

Das Beschichtungsmittel der vorliegenden Erfindung enthält bevorzugt zusätzlich zu dem Festanteil mit den 100 Gew.-Teilen der Komponenten a) bis c) 0 bis 900 Gew.-Teile, besonders bevorzugt 0 bis 850 Gew.-Teile, ganz besonders bevorzugt 200 bis 800 Gew.-Teile wenigstens eines organischen Lösungsmittels.

Das Beschichtungsmittel gemäß der vorliegenden Erfindung kann zudem über die 100 Gew.-Teile der Komponenten a) bis c) hinaus optional ein oder mehrere weitere Lackadditive enthalten. Solche Lackadditive können beispielsweise ausgewählt sein aus der Gruppe enthaltend Stabilisatoren, Verlaufsmittel, Oberflächenadditive, Pigmente, Farbstoffe, anorganische Nanopartikel, Haftvermittler, UV-Absorber, IR-Absorber, bevorzugt aus der Gruppe enthaltend Stabilisatoren, Verlaufsmittel, Oberflächenadditive und anorganische Nanopartikel. Das Beschichtungsmittel gemäß der vorliegenden Erfindung kann in bevorzugten Ausführungsformen zusätzlich zu den 100 Gew.-Teilen der Komponenten a) bis c) 0 bis 35 Gew.-Teile, besonders bevorzugt 0 bis 30 Gew.-Teile, ganz besonders bevorzugt 0,1 bis 20 Gew.-Teile wenigstens eines weiteren Lackadditivs. Bevorzugt beträgt der Gesamtanteil aller in der Lackzusammensetzung enthaltenen Lackadditive 0 bis 20 Gew.-Teile, besonders bevorzugt 0 bis 10 Gew.-Teile, ganz besonders bevorzugt 0,1 bis 10 Gew.-Teile.

Das Beschichtungsmittel kann anorganische Nanopartikel zur Erhöhung der mechanischen Beständigkeit, wie z.B. Kratzfestigkeit und/oder Bleistifthärte enthalten.

Als Nanopartikel kommen anorganische Oxide, Mischoxide, Hydroxide, Sulfate, Carbonate, Carbide, Boride und Nitride von Elementen der II bis IV Hauptgruppe und/oder Elementen der I bis VIII Nebengruppe des Periodensystems einschließlich der Lanthanide in Frage. Bevorzugte Nanopartikel sind Siliziumoxid-, Aluminiumoxid-, Ceroxid-, Zirkonoxid-, Nioboxid-, Zinkoxid- oder Titanoxid-Nanopartikel, besonders bevorzugt sind Siliziumoxid-Nanopartikel.

Die eingesetzten Partikel weisen vorzugsweise mittlere Partikelgrößen (gemessen mittels dynamischer Lichtstreuung in Dispersion bestimmt als Z-Mittelwert) kleiner 200 nm, bevorzugt von 5 bis 100 nm, besonders bevorzugt 5 bis 50 nm auf. Bevorzugt weisen wenigstens 75%, besonders bevorzugt wenigstens 90 %, ganz besonders bevorzugt wenigstens 95% aller eingesetzten Nanopartikel die vorstehend definierten Größen auf.

Das Beschichtungsmittel kann auf einfache Weise hergestellt werden, indem das Polymer in dem Lösemittel bei Raumtemperatur oder bei erhöhten Temperaturen vorerst komplett gelöst wird und dann der bis Raumtemperatur abgekühlten Lösung die anderen obligatorischen und gegebenenfalls die optionalen Komponenten entweder in Abwesenheit von Lösungsmittel(n) zusammen gegeben und durch Rühren miteinander vermischt werden oder in Anwesenheit von Lösungsmittel(n) beispielsweise in das oder die Lösungsmittel gegeben und durch Rühren miteinander vermischt werden. Bevorzugt wird zuerst der Fotoinitiator in dem oder den Lösungsmitteln gelöst und anschließend die weiteren Komponenten hinzugegeben. Gegebenenfalls erfolgt anschließend noch eine Reinigung mittels Filtration, vorzugsweise mittels Feinfiltration.

Ein weiterer Gegenstand der vorliegenden Erfindung ist daher ein Verfahren zu Herstellung eines Beschichtungsmittels, umfassend das Lösen der Komponenten (a), (b), und (c) in dem mindestens einem Lösungsmittel, wobei (a), (b) und (c) gleichzeitig gelöst werden, oder erst (a) gelöst wird und dann (b) und/oder (c) gelöst werden, oder (a), (b) und (c) separat voneinander in mindestens einem Lösungsmittel gelöst und die Lösungen dann vereinigt werden.

In einer bevorzugten Ausführungsform wird erst (a) unter Erwärmen in mindestens einem Lösungsmittel gelöst und danach (b) und (c) dazu gegeben.

Die erfindungsgemäßen Beschichtungszusammensetzungen eignen sich demnach besonders zur Beschichtung von Oberflächen von Substraten, wie z.B. Kunststoffen, Holz oder Glas, insbesondere von Kunststoffoberflächen. Aufgrund ihrer hohen Transparenz können die erfindungsgemäßen Beschichtungen insbesondere auch auf transparenten Kunststoffen, vorzugsweise transparenten Thermoplasten wie Polycarbonat, Polyacrylat oder Poly(meth)acrylat, Polysulfone, Polyester, thermoplastisches Polyurethan und Polystyrol sowie deren Copolymere und Mischungen (Blends) eingesetzt werden. Geeignete Thermoplasten sind beispielsweise Polyacrylate, Poly(meth)acrylate (z.B. PMMA; z.B. Plexiglas® von der Fa. Röhm), Cycloolefin-Copolymere (COC; z.B. Topas® von der Fa. Ticona; Zenoex® von der Fa. Nippon Zeon oder Apel® von der Fa. Japan Synthetic Rubber), Polysulfone (Ultrason@ von der BASF oder Udel® von der Fa. Solvay), Polyester, wie z.B. PET oder PEN, Polycarbonat (PC), Polycarbonat/Polyester-Blends, z.B. PC/PET, Polycarbonat/Polycyclohexylmethanolcyclohexandicarboxylat (PCCD; Xylecs® von der Fa GE), Polycarbonat/PBT und Mischungen daraus.

Bevorzugt werden Polycarbonate oder Copolycarbonate eingesetzt, und insbesondere werden sie bevorzugt in Form einer Folie eingesetzt.

Bevorzugt werden Polycarbonat- oder Copolycarbonat- Folien mit einer co-extrudierten Schicht von Poly(meth)acrylat eingesetzt.

Ein weiterer Gegenstand der vorliegenden Erfindung ist ein Verfahren zur Herstellung einer Schutzschicht, umfassend die Schritte
(i) Beschichten eines Substrates ausgewählt aus der Gruppe bestehend aus Kunststoffteilen, Kunststofffolien, Holz, Papier und Metalloberflächen mit einem Beschichtungsmittel, umfassend
   (a) mindestens ein thermoplastisches Polymer mit einem mittleren Molgewicht Mw von mindestens 100.000 g/mol in einem Gehalt von mindestens 30 Gew.-% des Festanteils des Beschichtungsmittels;
   (b) mindestens einen UV-härtbaren Reaktivverdünner in einem Gehalt von mindestens 30 Gew.-% des Festanteils des Beschichtungsmittels;
   (c) mindestens einen Fotoinitiator in einem Gehalt von ≥ 0,1 bis ≤ 10 Gewichtsteilen des Festanteils des Beschichtungsmittels; und
   (d) mindestens ein organisches Lösungsmittel,
   wobei der Anteil an ethylenisch ungesättigten Gruppen mindestens 3 mol pro kg des Festanteils des Beschichtungsmittels beträgt;
(ii) Trocknen der Beschichtung;
(iii) gegebenenfalls zurechtschneiden, dekaschieren, bedrucken und/oder thermisches oder mechanisches Verformen des Substrates; und
(iv) Bestrahlen der Beschichtung mit aktinischer Strahlung, dabei Härten der Beschichtung.

Im Folgenden wird das Verfahren beispielhaft anhand des besonders bevorzugten Substrates, einer Folie, insbesondere Folie umfassend ein thermoplastisches Polymer wie insbesondere Polycarbonat, beschrieben. Das Beschichten der Folie mit dem Beschichtungsmittel kann dabei nach den gängigen Verfahren der Beschichtung von Folien mit flüssigen Beschichtungsmitteln erfolgen, wie beispielsweise durch Rakeln, Spritzen, Gießen, Fluten, Tauchen, Sprühen, Aufwalzen oder Aufschleudern. Das Flutverfahren kann manuell mit Schlauch oder geeignetem Beschichtungskopf oder automatisch im Durchlauf über Flutlackierroboter- und gegebenenfalls Schlitzdüsen erfolgen. Bevorzugt wird eine Auftragung des Beschichtungsmittels über eine Übertragung Rolle auf Rolle. Die Oberfläche der zu beschichtenden Folie kann dabei durch Reinigung oder Aktivierung vorbehandelt sein.

Das Trocknen schließt sich an die Applikation des Beschichtungsmittels auf die Folie an. Hierzu wird insbesondere mit erhöhten Temperaturen in Öfen und mit bewegter und gegebenenfalls auch entfeuchteter Luft wie beispielsweise in Konvektionsöfen oder mittels Düsentrocknern sowie Wärmestrahlung wie IR und/oder NIR gearbeitet. Weiterhin können Mikrowellen zum Einsatz kommen. Es ist möglich und vorteilhaft, mehrere dieser Trocknungsverfahren zu kombinieren. Das Trocknen der Beschichtung im Schritt (ii) umfasst bevorzugt das Ablüften bei Raumtemperatur und/oder erhöhter Temperatur, wie vorzugsweise bei 20 - 200 °C, besonders bevorzugt bei 40 - 120 °C. Nach dem Trocknen der Beschichtung ist diese blockfest, so dass das beschichtete Substrat, insbesondere die beschichtete Folie kaschiert, bedruckt, und/oder thermisch verformt werden kann. Insbesondere das Verformen ist dabei bevorzugt, da hier schon durch das Verformen einer beschichteten Folie die Form für ein film insert molding-Verfahren zur Herstellung eines dreidimensionalen Kunststoffteils vorgegeben werden kann.

Vorteilhafterweise werden die Bedingungen für die Trocknung so gewählt, dass durch die erhöhte Temperatur und/oder die Wärmestrahlung keine Polymerisation (Vernetzung) der Acrylat- oder Methacrylatgruppen ausgelöst wird, da dieses die Verformbarkeit beeinträchtigen kann. Weiterhin ist die maximal erreichte Temperatur zweckmäßigerweise so niedrig zu wählen, dass sich die Folie nicht unkontrolliert verformt.

Nach dem Trocknungs-/Härtungsschritt kann die beschichtete Folie, gegebenenfalls nach Kaschierung mit einer Schutzfolie auf der Beschichtung, aufgerollt werden. Das Aufrollen kann geschehen, ohne dass es zum Verkleben der Beschichtung mit der Rückseite der Substratfolie oder der Kaschierfolie kommt. Es ist aber auch möglich, die beschichtete Folie zuzuschneiden und die Zuschnitte einzeln oder als Stapel der Weiterverarbeitung zuzuführen.

Unter Härtung mit aktinischer Strahlung versteht man die radikalische Polymerisation von ethylenisch ungesättigten Kohlenstoff-Kohlenstoff-Doppelbindungen mittels Initiatorradikalen, die durch Bestrahlung mit aktinischer Strahlung beispielsweise aus den vorstehend beschriebenen Fotoinitiatoren freigesetzt werden.

Die Strahlungshärtung erfolgt bevorzugt durch Einwirkung energiereicher Strahlung, also UV-Strahlung oder Tageslicht, zum Beispiel Licht der Wellenlänge von ≥ 200 nm bis ≤ 750 nm, oder durch Bestrahlen mit energiereichen Elektronen (Elektronenstrahlung, zum Beispiel von ≥ 90 keV bis ≤ 300 keV). Als Strahlungsquellen für Licht oder UV-Licht dienen beispielsweise Mittel- oder Hochdruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Excimerstrahler sind ebenfalls einsetzbar. Die Strahler können ortsunbeweglich installiert sein, so dass das zu bestrahlende Gut mittels einer mechanischen Vorrichtung an der Strahlungsquelle vorbeibewegt wird, oder die Strahler können beweglich sein, und das zu bestrahlende Gut verändert bei der Härtung seinen Ort nicht. Die üblicherweise zur Vernetzung ausreichende Strahlungsdosis bei UV-Härtung liegt im Bereich von ≥ 80 mJ/cm² bis ≤ 5000 mJ/cm².

In einer bevorzugten Ausführungsform ist die aktinische Strahlung daher Licht im Bereich des UV-Lichtes.

Die Bestrahlung kann gegebenenfalls auch unter Ausschluss von Sauerstoff, zum Beispiel unter Inertgas-Atmosphäre oder Sauerstoff-reduzierter Atmosphäre durchgeführt werden. Als Inertgase eignen sich bevorzugt Stickstoff, Kohlendioxid, Edelgase oder Verbrennungsgase. Des weiteren kann die Bestrahlung erfolgen, indem die Beschichtung mit für die Strahlung transparenten Medien abgedeckt wird. Beispiele hierfür sind Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise oder durch orientierende Vorversuche zu variieren bzw. zu optimieren. Zur Härtung der verformten Folien ist es besonders vorteilhaft, die Härtung mit mehreren Strahlern durchzuführen, deren Anordnung so zu wählen ist, dass jeder Punkt der Beschichtung möglichst die zur Aushärtung optimale Dosis und Intensität an Strahlung erhält. Insbesondere sind nicht bestrahlte Bereiche (Schattenzonen) zu vermeiden.

Weiterhin kann es je nach eingesetzter Folie vorteilhaft sein, die Bestrahlungsbedingungen so zu wählen, dass die thermische Belastung der Folie nicht zu groß wird. Insbesondere dünne Folien sowie Folien aus Materialien mit niedriger Glasübergangstemperatur können zur unkontrollierten Verformung neigen, wenn durch die Bestrahlung eine bestimmte Temperatur überschritten wird. In diesen Fällen ist es vorteilhaft, durch geeignete Filter oder Bauart der Strahler möglichst wenig Infrarotstrahlung auf das Substrat einwirken zu lassen. Weiterhin kann durch Reduktion der entsprechenden Strahlendosis der unkontrollierten Verformung entgegengewirkt werden. Dabei ist jedoch zu beachten, dass für eine möglichst vollständige Polymerisation eine bestimmte Dosis und Intensität der Bestrahlung notwendig sind. Es ist in diesen Fällen besonders vorteilhaft, unter inerten oder sauerstoffreduzierten Bedingungen zu härten, da bei Reduktion des Sauerstoffanteils in der Atmosphäre oberhalb der Beschichtung die erforderliche Dosis zur Aushärtung abnimmt.

Besonders bevorzugt werden zur Härtung Quecksilberstrahler in ortsfesten Anlagen eingesetzt. Fotoinitiatoren werden dann in Konzentrationen von ≥ 0,1 Gewichts-% bis ≤ 10 Gewichts-%, besonders bevorzugt von ≥ 0,2 Gewichts-% bis ≤ 3,0 Gewichts-% bezogen auf den Festkörper der Beschichtung eingesetzt. Zur Härtung dieser Beschichtungen wird bevorzugt eine Dosis von ≥ 80 mJ/cm² bis ≤ 5000 mJ/cm² eingesetzt.

Ein weiterer Gegenstand der vorliegenden Erfindung betrifft daher ein beschichtetes Substrat, erhältlich durch ein Verfahren, umfassend die Schritte
(i) Beschichten eines Substrates ausgewählt aus der Gruppe bestehend aus Kunststoffteilen, Kunststofffolien, Holz, Papier und Metalloberflächen mit einem Beschichtungsmittel, umfassend
   (a) mindestens ein thermoplastisches Polymer mit einem mittleren Molgewicht Mw von mindestens 100.000 g/mol in einem Gehalt von mindestens 30 Gew.-% des Festanteils des Beschichtungsmittels;
   (b) mindestens einen UV-härtbaren Reaktivverdünner in einem Gehalt von mindestens 30 Gew.-% des Festanteils des Beschichtungsmittels;
   (c) mindestens einen Fotoinitiator in einem Gehalt von ≥ 0,1 bis ≤ 10 Gewichtsteilen des Festanteils des Beschichtungsmittels; und
   (d) mindestens ein organisches Lösungsmittel,
   wobei der Anteil an ethylenisch ungesättigten Gruppen mindestens 3 mol pro kg des Festanteils des Beschichtungsmittels beträgt;
(ii) Trocknen der Beschichtung;
(iii) gegebenenfalls zurechtschneiden, dekaschieren, bedrucken und/oder thermisches oder mechanisches Verformen des Substrates; und
(iv) Bestrahlen der Beschichtung mit aktinischer Strahlung, dabei Härten der Beschichtung.

In einer bevorzugten Ausführungsform ist das Substrat eine Folie, insbesondere eine Polycarbonatfolie.

Die beschichtete Oberfläche der resultierenden gehärteten, beschichteten, und gegebenenfalls verformten Folie zeigt sehr gute Beständigkeiten gegenüber Lösungsmitteln, färbenden Flüssigkeiten, wie sie im Haushalt vorkommen, sowie hohe Härte, gute Kratz- und Abriebbeständigkeiten bei hoher optischer Transparenz.

Solche Folien können beispielsweise zur Herstellung von Formkörpern eingesetzt werden, welche Strukturelemente mit sehr kleinen Krümmungsradien aufweisen. Die Beschichtungen weisen nach der Härtung eine gute Abriebfestigkeit und Chemikalienbeständigkeit auf.

Die erfindungsgemäß einzusetzende Folie besitzt vorteilhafterweise neben der geforderten allgemeinen Beständigkeit vor allem die nötige thermische Verformbarkeit. Prinzipiell geeignet sind daher insbesondere thermoplastische Polymere wie ABS, AMMA, ASA, CA, CAB, EP, UF, CF, MF, MPF, PF, PAN, PA, PE, HDPE, LDPE, LLDPE, PC, PET, PMMA, PP, PS, SB, PUR, PVC, RF, SAN, PBT, PPE, POM, PP-EPDM, und UP (Kurzbezeichnungen nach DIN 7728T1) sowie ihre Mischungen, weiterhin Verbundfolien aufgebaut aus zwei oder mehr Schichten dieser Kunststoffe. Allgemein können die erfindungsgemäß einzusetzenden Folien auch verstärkende Fasern oder Gewebe enthalten, sofern diese die erwünschte thermoplastische Verformung nicht beeinträchtigen.

Besonders geeignet sind thermoplastische Polyurethane, Polymethylmethacrylat (PMMA) sowie modifizierte Varianten von PMMA, weiterhin Polycarbonat (PC), ASA, PET, PP, PP-EPDM und ABS. Bevorzugt davon ist Polycarbonat und seine Folien-Coextrudate mit Polymethylmethacrylat. Ganz besonders bevorzugt ist Polycarbonat.

Geeignete Polycarbonate für die Herstellung der erfindungsgemäß als Substrat einzusetzenden Kunststoffzusammensetzung sind alle bekannten Polycarbonate. Dies sind Homopolycarbonate, Copolycarbonate und thermoplastische Polyestercarbonate. Die geeigneten Polycarbonate haben bevorzugt mittlere Molekulargewichte M̅_{w} von 18.000 bis 40.000, vorzugsweise von 26.000 bis 36.000 und insbesondere von 28.000 bis 35.000, ermittelt durch Messung der relativen Lösungsviskosität in Dichlormethan oder in Mischungen gleicher Gewichtsmengen Phenol/o-Dichlorbenzol geeicht durch Lichtstreuung.

Die Herstellung der Polycarbonate erfolgt vorzugsweise nach dem Phasengrenzflächenverfahren oder dem Schmelze-Umesterungsverfahren, welche mannigfaltig in der Literatur beschrieben werden. Zum Phasengrenzflächenverfahren sei beispielhaft auf H. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP-A 0 517 044 verwiesen. Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate werden aus Reaktionen von Bisphenolverbindungen mit Kohlensäureverbindungen, insbesondere Phosgen oder beim Schmelzeumesterungsprozess Diphenylcarbonat bzw. Dimethylcarbonat, erhalten. Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan besonders bevorzugt. Weitere Bisphenolverbindungen, die sich für die Polycarbonatsynthese einsetzen lassen, sind unter anderem offenbart in WO-A 2008037364, EP-A 1 582 549, WO-A 2002026862, WO-A 2005113639

Die Polycarbonate können linear oder verzweigt sein. Es können auch Mischungen aus verzweigten und unverzweigten Polycarbonaten eingesetzt werden.

Geeignete Verzweiger für Polycarbonate sind aus der Literatur bekannt und beispielsweise beschrieben in den Patentschriften US-B 4 185 009, DE-A 25 00 092, DE-A 42 40 313, DE-A 19 943 642, US-B 5 367 044 sowie in hierin zitierter Literatur. Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP-A 1 506 249 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Die Kunststoffzusammensetzung(en) der Substratschicht bzw. der Substratschichten können zusätzlich Additive, wie beispielsweise UV-Absorber, IR-Absorber sowie andere übliche Verarbeitungshilfsmittel, insbesondere Entformungsmittel und Fließmittel, sowie die üblichen Stabilisatoren, insbesondere Thermostabilisatoren sowie Antistatika, Pigmente, Farbmittel und optische Aufheller enthalten. In jeder Schicht können dabei unterschiedliche Additive bzw. Konzentrationen von Additiven vorhanden sein.

Die Folie oder auch Platte wird bevorzugt in einer Dicke von ≥ 10 µm bis ≤ 1500 µm, mehr bevorzugt von ≥ 50 µm bis ≤ 1000 µm und besonders bevorzugt von ≥ 200 µm bis ≤ 400 µm verwendet. Zusätzlich kann das Material der Folie Additive und/oder Prozesshilfsmittel zur Folienherstellung enthalten, wie zum Beispiel Stabilisatoren, Lichtschutzmittel, Weichmacher, Füllstoffe wie Fasern und Farbstoffe enthalten. Die zur Beschichtung vorgesehene sowie die andere Seite der Folie kann glatt sein oder eine Oberflächenstruktur aufweisen, wobei eine glatte Oberfläche der zu beschichtenden Seite bevorzugt ist.

In einer Ausführungsform ist die Folie eine Polycarbonatfolie mit einer Dicke von ≥ 10 µm bis ≤ 1500 µm. Hierunter ist ebenfalls eine Polycarbonatfolie mit den vorgenannten Additiven und/oder Prozesshilfsmitteln eingeschlossen. Die Dicke der Folie kann auch ≥ 50 µm bis ≤ 1000 µm oder ≥ 200 µm bis ≤ 400 µm betragen.

In einer weiteren bevorzugten Ausführungsform ist die Substratfolie eine Polycarbonatfolie mit mindestens von einer Seite coextrudierten PMMA-Schicht, deren Dicke im Bereich von ≥ 10 µm und ≤ 100 µm, bevorzugt im Bereich von ≥ 15 µm und ≤ 60 µm liegt.

Die Folie kann ein- oder beidseitig beschichtet sein, wobei das einseitige Beschichten bevorzugt wird. Im Falle einseitiger Beschichtung kann auf der Rückseite der Folie, also auf der Oberfläche, auf der das Beschichtungsmittel nicht aufgebracht wird, optional eine thermisch verformbare Klebstoffschicht aufgebracht sein. Hierzu eignen sich je nach Vorgehensweise bevorzugt Schmelzklebstoffe oder strahlungshärtende Klebstoffe. Zusätzlich kann auf der Oberfläche der Klebeschicht noch eine Schutzfolie aufgebracht werden, die ebenfalls thermisch verformbar ist. Weiterhin ist es möglich, die Folie rückseitig mit Trägermaterialien wie Geweben auszustatten, die jedoch im gewünschten Maße verformbar sein sollten.

Die Blockfestigkeit der Beschichtung ist für die Folienbeschichtung eine erste, aber sehr wesentliche Eigenschaft, eben weil die Folien nach dem Beschichten üblicherweise aufgerollt werden. Je nach Größe der Rolle kann der Druck auf die Oberfläche der Beschichtung, zumal in der Nähe des Wickelkerns, erheblich sein. Unter dieser Belastung sollte die Oberfläche der getrockneten Beschichtung nicht deformiert werden. Übliche Kaschierfolien, die in diesem Bereich industriell eingesetzt werden, sind extrudierte Folien aus Polyethylen. Diese haben immer eine Oberflächenstruktur, die sich idealerweise nicht in die Beschichtung einprägen sollte.

Optional kann die Folie vor oder nach dem Auftragen der strahlungshärtbaren Schicht mit einer oder mehreren Schichten lackiert oder bedruckt werden. Dieses kann auf der beschichteten oder auf der unbeschichteten Seite der Folie erfolgen. Die Schichten können farb- oder funktionsgebend sein, vollflächig oder nur teilweise, zum Beispiel als Druckbild, aufgetragen werden. Die verwendeten Lacke sollten thermoplastisch sein, um bei einer später erfolgenden Verformung nicht zu reißen. Druckfarben, wie sie für so genannte "In-Mould-Decoration"-Verfahren kommerziell erhältlich sind, können eingesetzt werden.

In einer Ausführungsform erfolgt das Formen der Folie mit der getrockneten Beschichtung in einem Werkzeug bei einem Druck von ≥ 20 bar bis ≤ 150 bar. Vorzugsweise liegt der Druck bei diesem Hochdruckverformverfahren in einem Bereich von ≥ 50 bar bis ≤ 120 bar oder in einem Bereich von ≥ 90 bar bis ≤ 110 bar. Der anzuwendende Druck wird insbesondere von der Dicke der zu verformenden Folie und der Temperatur sowie dem verwendeten Folienmaterial bestimmt.

In einer weiteren Ausführungsform findet das Formen bei einer Temperatur von ≥ 20 °C bis ≤ 60 °C unterhalb der Erweichungstemperatur des Materials der Folie statt. Vorzugsweise liegt diese Temperatur um ≥ 30 °C bis ≤ 50 °C oder um ≥ 40 °C bis ≤ 45 °C unterhalb der Erweichungstemperatur. Dieses einer Kaltverformung vergleichbare Vorgehen hat den Vorteil, dass dünnere Folien, die zu exakterer Ausformung führen, verwendet werden können. Ein weiterer Vorteil sind kürzere Taktzeiten sowie eine geringere thermische Belastung der Beschichtung. Solche Verformungstemperaturen werden vorteilhafterweise in Kombination mit einem Hochdruckverformverfahren eingesetzt.

Die vorliegende Erfindung betrifft weiterhin die Verwendung von beschichteten Folien gemäß der Erfindung zur Herstellung von Formkörpern, wie insbesondere in film insert molding Verfahren, wie sie im Stand der Technik bekannt sind. Die erfindungsgemäß hergestellten beschichteten Folien sind wertvolle Materialien zur Herstellung von Gebrauchsgegenständen. So kann die beschichtete Folie Verwendung finden in der Herstellung von Fahrzeuganbauteilen, Kunststoffteilen wie Blenden für den Fahrzeug(innen)bau und/oder Flugzeug(innen)bau, Möbelbau, elektronischen Geräten, Kommunikationsgeräten, Gehäusen und dekorativen Gegenständen. Die vorliegende Erfindung betrifft daher auch die Verwendung der erfindungsgemäßen beschichteten Folien sowie ebenfalls des erfindungsgemäßen Beschichtungsmittels in der Herstellung von Fahrzeuganbauteilen, Kunststoffteilen wie Blenden für den Fahrzeug(innen)bau und/oder Flugzeug(innen)bau, Möbelbau, elektronischen Geräten, Kommunikationsgeräten, Gehäusen und dekorativen Gegenständen.

In einer weiteren bevorzugten Ausführungsform des beschichteten Substrates, insbesondere der beschichteten Folie, bevorzugt der beschichteten Polycarbonatfolie, umfasst das Verfahren einen weiteren Schritt (v) Hinterspritzen des beschichteten Substrats, insbesondere der beschichteten Polycarbonatfolie mit mindestens einem Polymer auf der unbeschichteten Seite der Polycarbonatfolie. Dabei kommen als Polymere alle oben genannten Polymere in Frage. Auf diese Weise können sehr effizient Formkörper mit der erfindungsgemäßen, vorteilhaften beschichten Oberfläche hergestellt werden. Dieses ist für die oben genannten Anwendungen der beschichteten Folie sehr vorteilhaft.

### Beispiele:

### Bewertungsmethoden:

### Bewertung der Blockfestigkeit

Zur Simulation der Blockfestigkeit von aufgerollten vorgetrockneten beschichteten Folien reichen klassische Prüfmethoden wie etwa in DIN 53150 beschrieben nicht aus, weshalb auf nachfolgende Prüfung zurückgegriffen wurde: Die Beschichtungsmaterialien wurden mit einer handelsüblichen Rakel (Sollnassschichtdicke 100 µm) auf Makrofol DE 1-1 (375 µm) aufgetragen. Nach einer Ablüftphase von 10 min bei 20 °C bis 25 °C wurde die beschichteten Folien für 10 min bei 110 °C in einem Umluftofen getrocknet. Nach einer Abkühlphase von 1 min wurde eine handelsübliche Haftkaschierfolie GH-X173 natur (Firma Bischof u. Klein, Lengerich, Deutschland) mit einer Kunststoffwalze auf eine Fläche von 100 mm x 100 mm faltenfrei auf der getrockneten beschichteten Folie aufgebracht. Anschließend wurde das kaschierte Folienstück flächig mit einem Gewicht von 10 kg für 1 Stunde belastet. Danach wurde die Kaschierfolie entfernt und die beschichtete Oberfläche visuell beurteilt.

### Bewertung der Bleistifthärte

Die Bleistifthärte wurde analog ASTM D 3363 unter Verwendung eines Elcometer 3086 Scratch boy (Elcometer Instruments GmbH, Aalen, Deutschland) bei einer Belastung von 500 g, wenn nicht anders angegeben, gemessen.

### Bewertung der Stahlwolle-Verkratzung

Die Stahlwolle-Verkratzung wird bestimmt, indem eine Stahlwolle No. 00 (Oskar Weil GmbH Rakso, Lahr, Deutschland) auf das flächige Ende eines 500 g Schlosser-Hammers geklebt wird, wobei die Fläche des Hammers 2,5 cm x 2,5 cm, d.h. ca. 6,25 cm² beträgt. Der Hammer wird ohne zusätzlichen Druck auf die zu prüfende Fläche aufgesetzt, so dass eine definierte Belastung von ca. 560 g erreicht wird. Der Hammer wird dann 10mal in Doppelhüben vor und zurück bewegt. Nachfolgend wird die belastete Oberfläche mit einem weichen Tuch von Geweberückständen und Lackpartikeln gereinigt. Die Verkratzung wird durch Haze- und Glanzwerte charakterisiert, gemessen quer zur Verkratzungsrichtung mit dem Micro HAZE plus (20 °-Glanz und Haze; Byk-Gardner GmbH, Geretsried, Deutschland). Die Messung erfolgt vor und nach Verkratzung. Angegeben werden die Differenzwerte bei Glanz und Haze vor und nach Belastung als ΔGlanz und ΔHaze.

### Bewertung der Lösemittelbeständigkeit

Die Lösemittelbeständigkeit der Beschichtungen wurde üblicherweise mit Isopropanol, Xylol, 1-Methoxy-2-propylacetat, Ethylacetat, Aceton in technischer Qualität geprüft. Die Lösemittel wurden mit einem durchnässten Wattebausch auf die Beschichtung aufgetragen und durch Abdecken gegen Verdunstung geschützt. Es wurde, wenn nicht anders beschrieben, eine Einwirkzeit von 60 Minuten bei ca. 23 °C eingehalten. Nach dem Ende der Einwirkzeit wird der Wattebausch entfernt und die Prüffläche mit einem weichen Tuch sauber gewischt. Die Abmusterung erfolgt sofort visuell und nach leichten Kratzen mit dem Fingernagel.

Folgende Stufen werden unterschieden:
- 0 = unverändert; keine Veränderung sichtbar; durch Kratzen nicht verletzbar.
- 1 = leichte Anquellung sichtbar, aber durch Kratzen nicht verletzbar.
- 2 = Veränderung deutlich sichtbar, durch Kratzen kaum verletzbar.
- 3 = merklich verändert nach festem Fingernageldruck oberflächlich zerstört.
- 4 = stark verändert nach festem Fingernageldruck bis zum Untergrund durchgekratzt.
- 5 = zerstört; schon beim Abwischen der Chemikalie wird der Lack zerstört; die Testsubstanz ist nicht entfernbar (eingefressen).

Innerhalb dieser Bewertung wird der Test mit den Kennwerten 0 und 1 üblicherweise bestanden. Kennwerte > 1 stehen für ein "nicht bestanden".

### Beispiel 1: Herstellung Beschichtungsmittel

In einem 15L-Kessel wurde Degacryl MW 730 (Copolymerisat auf Basis von PMMA, M_{w}=10⁶; Fa. Evonik) in 1-Methoxy-2-propanol bei 100°C (Innentemperatur) wie folgt gelöst: 4500 g 1-Methoxy-2-propanol (2a) wurden vorgelegt und unter Rühren wurden 1100 g Degacryl MW 730 (1) eingetragen. Es wurde mit 2500 g 1-Methoxy-2-propanol (2b) nachgespült. Der Lösevorgang dauerte ca. 4 Stunden. Auf diese Weise wurde eine homogene, klare, farblose und zähflüssige Masse erhalten. Nach dem Lösevorgang wurde der Ansatz auf Raumtemperatur abgekühlt. 1100 g Dipentaerythritol penta/hexa-acrylat (DPHA Fa.Cytec) wurden separat mit 2500 g 1-Methoxy-2-propanol verdünnt. Bei Raumtemperatur wurde diese Lösung in die Apparatur gegeben und 2 Stunden untergemischt. 44,0 g Irgacure 1000 (BASF), 22,0 g Darocure 4265 (BASF) und 5,5 g BYK 333 (Fa.BYK) wurden separat mit 400 g 1-Methoxy-2-propanol verdünnt. Bei Erreichen einer Homogenität dieser Lösung wurde diese in die Apparatur gegeben und gut untergemischt. Der Ansatz wurde anschließend ca. 6 Stunden unter Lichtausschluss gerührt. Ausbeute: 11363 g. Das Beschichtungsmittel hatte einen Feststoffgehalt von 17% und eine Viskosität (23°C) bei 9000 mPas. Im Feststoffanteil des Beschichtungsmittels betrug der Anteil des Hochpolymers ebenso wie Anteil des Reaktivverdünners jeweils 48,4 Gew.-%. Der Gehalt der ethylenisch ungesättigten Gruppen pro kg Festgehalt des Beschichtungsmittels betrug ca. 5,2 mol.

Die Zusammensetzung der weiteren Beschichtungsmittel ist den Tabellen 1 und 2 zu entnehmen.

### Beispiel 2: Beschichtung von Folien

Das Beschichtungsmittel entsprechend Beispiel 1 wird mittels Schlitzgießer der Firma "TSE Troller AG" auf die Trägerfolie, z.B. Makrofol DE 1-1 (Bayer MaterialScience AG, Leverkusen, Deutschland), aufgetragen.

Typische Antragsbedingungen sind wie folgt:
- Bahngeschwindigkeit 1,3 bis 2,0 m/min
- Nasslackauftrag 100 - 150 µm
- Umlufttrockner 90 - 110 °C, bevorzugt im Bereich der TG des zu trocknenden Polymers.
- Verweilzeit im Trockner 3,5 - 5 min.

Die Beschichtung erfolgt Rolle auf Rolle, das heißt, dass die Polycarbonatfolie in der Beschichtungsanlage abgerollt wird. Die Folie wird durch eines der oben genannten Antragsaggregate geführt und mit der Beschichtungslösung beaufschlagt. Danach wird die Folie mit der nassen Beschichtung durch den Trockner gefahren. Nach Ausgang aus dem Trockner wird die jetzt trockene Beschichtung üblicherweise mit einer Kaschierfolie versehen, um diese vor Verschmutzung und Verkratzung zu schützen. Danach wird die Folie wieder aufgerollt.

### Beispiel 3: Ermittlung der Blockfestigkeit

Die beschichtete Seite der in Beispiel 2 erzeugten Folie wurde mit einer Kaschierfolie vom Typ GH-X 173 A (Bischof + Klein, Lengerich, Deutschland) abgedeckt und 1 h bei ca. 23 °C mit einer Aluminiumplatte in den Maßen 4,5 x 4,5 cm² und einem Gewicht von 2 kg beaufschlagt. Danach wurden das Gewicht und die Kaschierfolie entfernt und die Oberfläche der Beschichtung visuell auf Veränderungen geprüft.

Für die Ermittlung der Blockfestigkeit wurden die in Tabelle 1 aufgeführten Formulierungen verwendet. Basis waren kommerziell erhältliche Polymethylmethacrylat-Bindemittel, welche mit einem Reaktivverdünner, Fotoinitiatoren und üblichen Additiven zu einer Beschichtungslösung formuliert wurden, die dann auf eine Polycarbonatfolie aufgetragen und physikalisch getrocknet wurden.

**Tabelle 1: Abhängigkeit der Blockfestigkeit vom Molekulargewicht des PMMA**

| | | MW*) | 1 | 2 | 3 | 4 | 5 | 6 | 7 |
|---|---|---|---|---|---|---|---|---|---|
| Degalan M825 | 1) | 80.000 | 23,77 | | | | | | |
| Degalan M345 | 1) | 180.000 | | 19,01 | | | | | |
| Degalan M920 | 1) | 300.000 | | | 10,45 | | | | |
| Degacryl M547 | 1) | 500.000 | | | | 11,88 | | | |
| Degacryl M727 | 1) | 700.000 | | | | | 10,93 | | |
| Degacryl MW730 | 1) | 1.000.000 | | | | | | 9,00 | |
| Degacryl 6962 F | 1) | 1.250.000 | | | | | | | 7,61 |
| | | | | | | | | | |
| 1-Methoxy-2-propanol | | | 49,98 | 60,00 | 78,01 | 75,00 | 77,00 | 81,06 | 84,00 |
| DPHA**) | 2) | | 23,77 | 19,01 | 10,45 | 11,88 | 10,93 | 9,00 | 7,61 |
| Irgacure 1000 | 3) | | 1,90 | 1,52 | 0,84 | 0,95 | 0,87 | 0,72 | 0,61 |
| Darocur 4265 | 3) | | 0,48 | 0,38 | 0,21 | 0,24 | 0,22 | 0,18 | 0,15 |
| Byk 333 | 4) | | 0,10 | 0,08 | 0,04 | 0,05 | 0,04 | 0,04 | 0,02 |
| | | | | | | | | | |
| Blockfestigkeit | | | Abdruck | i.O. | i.O. | i.O. | i.O. | i.O. | i.O. |

| | | | | | | | | | |
|---|---|---|---|---|---|---|---|---|---|
| 1) Evonik Industries, Darmstadt, Deutschland. 2) DSM-AGI Corp., Taipei, Taiwan 3) BASF AG, Ludwigshafen, Deutschland 4) Byk Additives & Instruments, Wesel, Deutschland *) Molekulargewicht als Gewichtsmittel Mw nach Herstellerangabe **) Dipentaerythritol-hexaacrylat | | | | | | | | | |

Die Zusammensetzung des Eintrags Nr. 1 in Tabelle 1 entspricht nicht der Erfindung und dient als Vergleichsbeispiel. Die Versuche in Tabelle 1 zeigen somit, dass die Blockfestigkeit der erfindungsgemäßen Beschichtungen ab einem Molekulargewicht des Polymethylmethacrylats von 100.000 und mehr gegeben ist.

### Beispiel 4: Härten der Beschichtungen, Prüfen der Oberflächen

Die HPF-Verformungsversuche wurden auf einer SAMK 360 - Anlage (Hersteller HDVF Kunststoffmaschinen GmbH) ausgeführt. Das Werkzeug wurde auf 100 °C elektrisch beheizt. Die Folienaufheizung wurde mittels IR Strahler bei 240-260-280 °C vorgenommen. Die Heizzeit betrug 16 Sekunden. Es wurde eine Folientemperatur von ca. 170 °C erreicht. Die Verformung erfolgte bei einem Verformungsdruck von 100 bar. Das Verformungswerkzeug war eine HL-Blende.

Der Folienbogen wurde auf einer Palette positionsgenau fixiert. Die Palette fuhr durch die Verformungsstation in die Heizzone und verweilte dort die eingestellte Zeit (16 s). Dabei wurde die Folie so aufgeheizt, dass die Folie kurzzeitig eine Temperatur oberhalb des Erweichungspunktes erfuhr, der Kern der Folie war ca. 10-20 °C kälter. Dadurch war die Folie relativ stabil, wenn sie in die Verformungsstation eingefahren wurde.

In der Verformungsstation wurde die Folie durch Zufahren des Werkzeuges über dem eigentlichen Werkzeug fixiert, gleichzeitig wurde mittels Gasdruck die Folie über das Werkzeug geformt. Die Druckhaltezeit von 7 s sorgte dafür, dass die Folie das Werkzeug passgenau abformte. Nach der Haltezeit wurde der Gasdruck wieder entlastet. Das Werkzeug öffnete sich und die umgeformte Folie wurde aus der Verformungsstation herausgefahren.

Die Folie wurde anschließend von der Palette entnommen und konnte nun mit UV-Licht ausgehärtet werden.

Mit dem verwendeten Werkzeug wurden Radien bis herunter auf 1 mm abgebildet.

Die UV-Härtung der erfindungsgemäßen Beschichtung wurde mit einer Quecksilberdampf-Hochdrucklampe vom Type evo 7 dr (ssr engineering GmbH, Lippstadt, Deutschland) ausgeführt. Die Anlage war ausgestattet mit dichroitischem Reflektoren und Quarzscheiben und hatte eine spezifische Leistung von 160 W/cm. Es wurde eine UV-Dosis von 2,0 J/cm² und eine Intensität von 1,4 W/cm² appliziert. Die Oberflächentemperatur sollte > 60 °C erreichen.

Die Angaben zur UV-Dosis wurden mit einem Lightbug ILT 490 (International Light Technologies Inc., Peabody MA, USA) ermittelt. Die Angaben zur Oberflächentemperatur wurden mit Temperatur-Teststreifen der Marke RS (Bestellnummer 285-936; RS Components GmbH, Bad Hersfeld, Deutschland) ermittelt.

Die Ergebnisse zur Beständigkeit der Beschichtungen, die unter Verwendung der genannten Bedingungen vernetzt wurden, sind Tabelle 2 zu entnehmen.

Tabelle 2 fasst die Versuche hinsichtlich der Variation des Molekulargewichts des PMMA und der Vernetzungsdichte, dargestellt über die Doppelbindungsdichte der Beschichtungsformulierung zusammen. Die Versuche bzw. Zusammensetzungen der Einträge 1 bis 5 in der Tabelle sind nicht gemäß der vorliegenden Erfindung und dienen als Vergleichsbeispiele.

**Tabelle 2: Abhängigkeit der Beständigkeit vom Molekulargewicht des PMMA und vom Anteil des Reaktivverdünners**

| | 1 | 2 | 3 | 4 | 5 | 6 | 7 | 8 | 9 | 10 | 11 |
|---|---|---|---|---|---|---|---|---|---|---|---|
| Produkt | PolycarbonatFolie, Makrofol DE 1-1 | Degalan M825, unvernetzt | DBD 3 **) | DBD 4 | DBD 5,2 | DBD 3 | DBD 4 | DBD 5,2 | DBD 3 | DBD 4 | DBD 5,2 |
| Degalan M825 | - | - | 27,72 | 26,77 | 23,77 | | | | | | |
| Degalan M345 | - | - | | | | 24,00 | 20,84 | 19,01 | | | |
| Degalan M920 | - | - | | | | | | | 11,73 | 11,89 | 10,45 |
| Degacryl M547 | - | - | | | | | | | | | |
| Degacryl M727 | - | - | | | | | | | | | |
| Degacryl MW730 | - | - | | | | | | | | | |
| Degacryl 6962 F | - | - | | | | | | | | | |
| | | | | | | | | | | | |
| 1-Methoxy-2-propanol | - | - | 60,00 | 55,00 | 49,98 | 65,34 | 64,98 | 60,00 | 87,96 | 80,00 | 78,01 |
| DPHA | - | - | 11,09 | 16,49 | 23,77 | 9,63 | 12,86 | 19,01 | 4,71 | 7,34 | 10,45 |
| Irgacure 1000 | - | - | 0,89 | 1,32 | 1,90 | 0,77 | 1,03 | 1,52 | 0,38 | 0,59 | 0,84 |
| Darocure 4265 | | | 0,22 | 0,33 | 0,48 | 0,19 | 0,26 | 0,38 | 0,09 | 0,15 | 0,21 |
| Byk 333 | - | - | 0,08 | 0,09 | 0,10 | 0,07 | 0,03 | 0,08 | 0,03 | 0,04 | 0,04 |
| | | | | | | | | | | | |
| Lösemittelbeständigkeit IP / X / MPA / EA / Ac *) | 5/5/5/5/5 | 4/4/5/5/5 | 1/4/4/5/5 | 0/0/0/1/5 | 0/0/0/0/0 | 0/0/0/0/1 | 0/0/0/0/0 | 0/0/0/0/0 | 0/0/0/0/0 | 0/0/0/0/1 | 0/0/0/0/0 |
| Stahlwolleverkratzung ΔGlanz / ΔHaze | 100/280 | 120/230 | 72/285 | 32/153 | 3/193 | 25/121 | 6/5 | 6/13 | 27/130 | 3/5 | 2/12 |
| Bleistifthärte | 4B | HB | H | H | H | H | H | H | H | H | H |

| | | | | | | | | | | | |
|---|---|---|---|---|---|---|---|---|---|---|---|
| *) Isopropanol / Xylol / 1-Methoxy-2-propylacetat / Ethylacetat / Aceton. **) Doppelbindungsdichte (DBD) in mol Doppelbindungen pro kg Festharz | | | | | | | | | | | |

**Tabelle 2: Fortsetzung**

| | 12 | 13 | 14 | 15 | 16 | 17 | 18 | 19 | 20 | 21 |
|---|---|---|---|---|---|---|---|---|---|---|
| Produkt | DBD 4,5 | DBD 5,2 | DBD 4,5 | DBD 5,2 | DBD 3 | DBD 4 | DBD 4,5 | DBD 5,2 | DBD 4,5 | DBD 5,2 |
| Degalan M825 | | | | | | | | | | |
| Degalan M345 | | | | | | | | | | |
| Degalan M920 | | | | | | | | | | |
| Degacryl M547 | 12,02 | 11,88 | | | | | | | | |
| Degacryl M727 | | | 11,48 | 10,93 | | | | | | |
| Degacryl MW730 | | | | | 10,39 | 8,92 | 9,01 | 9,00 | | |
| Degacryl 6962 F | | | | | | | | | 8,20 | 7,61 |
| | | | | | | | | | | |
| 1-Methoxy-2-propanol | 78,00 | 75,00 | 79,01 | 49,98 | 85,01 | 85,00 | 83,50 | 81,06 | 85,01 | 84,00 |
| DPHA | 9,04 | 11,88 | 8,63 | 10,93 | 4,16 | 5,50 | 6,78 | 9,00 | 6,17 | 7,61 |
| Irgacure 1000 | 0,72 | 0,95 | 0,69 | 0,87 | 0,33 | 0,44 | 0,54 | 0,72 | 0,49 | 0,61 |
| Darocur 4265 | 0,18 | 0,24 | 0,17 | 0,22 | 0,08 | 0,11 | 0,14 | 0,18 | 0,12 | 0,15 |
| Byk 333 | 0,04 | 0,05 | 0,02 | 0,04 | 0,03 | 0,03 | 0,03 | 0,04 | 0,01 | 0,02 |
| Lösemittelbeständigkeit IP / X /MPA / EA / Ac | 0/0/0/0/1 | 0/0/0/0/0 | 0/0/0/0/1 | 0/0/0/0/0 | 0/0/0/0/5 | 0/0/0/0/1 | 0/0/0/0/1 | 0/0/0/0/0 | 0/0/0/0/1 | 0/0/0/0/0 |
| Stahlwolleverkratzung ΔGlanz / ΔHaze | 1/1 | 1/2 | 7/3 | 2/1 | 47/196 | 3/8 | 5/11 | 5/5 | 8/14 | 5/3 |
| Bleistifthärte | H | H | H | H | H | H | H | H | H | H |

Tabelle 2 zeigt, dass die Vernetzung des PMMA bereits eine deutliche Verbesserung bei Lösemittelbeständigkeit und Stahlwolle-Verkratzung im Vergleich zum unvernetzten PMMA bewirkt. (Spalten 2 - 5)

### Mit kleinem Molekulargewicht erreicht man aber auch bei hoher Vernetzungsdichte noch nicht die erforderliche Kratzfestigkeit. (Spalte 5)

Erst eine Erhöhung der Molmasse auf 100.000 g/mol oder mehr führt zu deutlich guten Werten in der Beständigkeit gegen Lösemittel und Verkratzung (Spalten 6 ff.). Der Kontrollversuch in Spalte 16 zeigt aber auch, dass selbst bei hohem Molekulargewicht eine Doppelbindungsdichte (DBD) von 4 oder höher notwendig ist, um in Lösemittelbeständigkeit und Kratzfestigkeit ein sehr gutes Niveau zu erreichen.

### Beispiel 5: Hinterspritzen der beschichteten Folien

Die Versuche wurden auf einer Spritzgießmaschine der Firma Arburg, Typ Allrounder 560 C 2000-675/350 durchgeführt. Die Maschine hat einen Schneckendurchmesser von 45 mm und als Werkzeug wurde die Bayer HL-Blende eingesetzt. Für das Hinterspritzmaterial ist ein Makrolon 2405 (transparent) des Herstellers Bayer MaterialScience AG verwendet worden.

Die dreidimensional (3D-) geformten, transparenten Folien wurden mit Makrolon (Polycarbonat, Bayer) mit einer Massetemperatur von 280 °C hinterspritzt. Die Füllzeit zur Füllung des Werkzeuges betrug 2 sec. Die Werkzeugtemperatur wurde variiert. Es konnten gute Ergebnisse mit einer Werkzeugtemperatur im Bereich von ≥ 80 °C und ≤ 100 °C erreicht werden. Einen negativen Effekt gab es diesbezüglich visuell nicht. Die Nachdruckzeit betrug 12 sec und die Kühlzeit lag bei 20 sek.

Die Folien wurden teilweise vorher auch mit einer schwarzen Siebdruckfarbe hinterdruckt. Hierzu wurde eine spezielle Farbe der Firma Pröll, Noriphan HTR, verwendet. Noriphan HTR ist speziell für das Hinterspritzen von Folien entwickelt worden und seit 1997 im Einsatz. Durch das Hinterdrucken kann zum einen ein Dekor auf der Folie erzeugt werden, zum anderen dient die Farbe auch als Haftvermittler für das Hinterspritzen mit PC/ABS Materialien. Hierbei wurden die Folien mit einem Bayblend T 65 XF (Bayer) hinterspritzt.

Die Versuche haben gezeigt, dass die verformten Folien ohne Probleme im Hinterspritzvorgang mit verschiedenen Materialien verarbeitet werden konnten, ohne dass die Hardcoatschicht dabei Schaden nimmt.

Es konnte gezeigt werden, dass mit Beschichtungen gemäß der vorliegenden Erfindung eine hervorragende Kombination aus Kratzfestigkeit, Lösungsmittelbeständigkeit und Bleistifthärte erzielt werden kann. Dabei ist insbesondere die Lösungsmittelbeständigkeit zu erwähnen. Aceton, das aggressivste Lösungsmittel für beschichtetes Makrofol, hat auf die erfindungsgemäße Endbeschichtung auch nach Einwirkzeiten von einer Stunde fast keine Wirkung (Kennwerte in Tabelle 2 von ≤ 1). Das bedeutet, dass die Lösungsmittelbeständigkeit, wie auch die gegebene Beständigkeit gegen vielen andere chemische Produkte wie Cremes, Sonnenöle und dergleichen für diese Beschichtungen auf dem Niveau der derzeit besten kommerziell erwerblichen hardcoats liegt. Darüber hinaus sind die Beschichtungen auf Folien bereits nach der Trocknung ausreichend blockfest, so dass mit dem erfindungsgemäßen Beschichtungsmittel beschichteten Folien nach der Trocknung der Beschichtung sich aufrollen oder auch thermisch verformen lassen. Diese Eigenschaft in Kombination mit der nach dem Härten erhaltenen kratzfesten, abriebbeständigen und lösemittelbeständigen Oberfläche der erfindungsgemäßen Beschichtungen macht das erfindungsgemäße Beschichtungsmittel und damit beschichtete thermoplastische Folien in besonderer Weise geeignet zur Verwendung in der Herstellung von Formkörpern in film insert molding Verfahren.

## Patentansprüche

1. Beschichtungsmittel, umfassend
(a) mindestens ein thermoplastisches Polymer mit einem mittleren Molgewicht Mw, bestimmt durch Gelpermeationschromatographie, von mindestens 100.000 g/mol in einem Gehalt von mindestens 30 Gew.-% des Festanteils des Beschichtungsmittels;
(b) mindestens einen UV-härtbaren Reaktivverdünner in einem Gehalt von mindestens 30 Gew.-% des Festanteils des Beschichtungsmittels;
(c) mindestens einen Fotoinitiator in einem Gehalt von ≥ 0,1 bis ≤ 10 Gewichtsteilen des Festanteils des Beschichtungsmittels; und
(d) mindestens ein organisches Lösungsmittel,
wobei der Anteil an ethylenisch ungesättigten Gruppen mindestens 3 mol pro kg des Festanteils des Beschichtungsmittels beträgt.

2. Beschichtungsmittel gemäß Anspruch 1, wobei das mindestens eine thermoplastische Polymer eine Vicaterweichungstemperatur VET gemäß ISO 306 von mindestens 90°C aufweist.

3. Beschichtungsmittel gemäß Anspruch 1 oder Anspruch 2, wobei das mindestens eine thermoplastische Polymer ausgewählt ist aus der Gruppe bestehend aus Polymethylmethacrylat, Polyester wie insbesondere Polyethylenterephtalat, Polyethylennaphthalat, Polybutylenterephthalat, ungesättigte Polyesterharze, Hart-PVC, Celluloseestern wie CA, CAB, CP, Polystyrol und Copolymere wie SAN, SB und MBS, Polyacrylnitril (PAN), ABS-Kunststoffe, Acrylnitrilmethylmethacrylat (AMMA), Acrylnitril-Styrol-Acrylester (ASA), Polyurethan (PUR), Polyethylen (PE, PE-HD, -LD, -LLD, -C), Polypropylen (PP), Polyamid (PA), Polycarbonat (PC) oder Polyethersulfon (PES).

4. Beschichtungsmittel gemäß Anspruch 3, wobei das thermoplastische Polymer PMMA-Homopolymere und/oder Copolymere aus 70 Gew.-% bis 99,5 Gew.-% Methylmethacrylat und 0,5 Gew.-% bis 30 Gew.-% Methylacrylat umfasst.

5. Beschichtungsmittel gemäß mindestens einem der vorstehenden Ansprüche, wobei der Reaktivverdünner (b) bifunktionelle, trifunktionelle, tetrafunktionelle, pentafunktionelle oder hexafunktionelle Acryl- und/oder Methacrylmonomere umfasst.

6. Beschichtungsmittel gemäß mindestens einem der vorstehenden Ansprüche 1 bis 5, wobei Komponente (b) alkoxylierte Diacrylate und/oder Dimethacrylate, alkoxylierte Triacrylate und/oder Trimethacrylate, alkoxylierte Tetraacrylate und/oder Tetramethacrylate, alkoxylierte Pentaaacrylate und/oder Pentamethacrylate, alkoxylierte Hexaacrylate und/oder Hexamethacrylate, aliphatische Urethanacrylate, Polyesteracrylate, Polyacrylacrylate und Gemische davon umfasst.

7. Beschichtungsmittel gemäß mindestens einem der vorstehenden Ansprüche, wobei das Lösungsmittel ausgewählt ist aus Ethanol, i-Propanol, Butanol, Essigsäureethylester, Essigsäurebutylester, 1-Methoxy-2-propanol, Diacetonalkohol, Xylol, Toluol, sowie Gemischen davon.

8. Verfahren zur Herstellung eines Beschichtungsmittels, umfassend das Lösen der Komponenten (a), (b), und (c) in dem mindestens einem Lösungsmittel, wobei (a), (b) und (c) gleichzeitig gelöst werden, oder erst (a) gelöst wird und dann (b) und/oder (c) gelöst werden, oder (a), (b) und (c) separat voneinander in mindestens einem Lösungsmittel gelöst und die Lösungen dann vereinigt werden.

9. Verfahren gemäß Anspruch 8, wobei erst (a) unter Erwärmen in mindestens einem Lösungsmittel gelöst wird und danach (b) und (c) dazu gegeben werden.

10. Verfahren zur Herstellung einer Schutzschicht, umfassend die Schritte
(i) Beschichten eines Substrates ausgewählt aus der Gruppe bestehend aus Kunststoffteilen, Kunststofffolien, Holz, Papier und Metalloberflächen mit einer Zusammensetzung, umfassend
(a) mindestens ein thermoplastisches Polymer mit einem mittleren Molgewicht Mw, bestimmt durch Gelpermeationschromatographie, von mindestens 100.000 g/mol in einem Gehalt von mindestens 30 Gew.-% des Festanteils des Beschichtungsmittels;
(b) mindestens einen UV-härtbaren Reaktivverdünner in einem Gehalt von mindestens 30 Gew.-% des Festanteils des Beschichtungsmittels;
(c) mindestens einen Fotoinitiator in einem Gehalt von ≥ 0,1 bis ≤ 10 Gewichtsteilen des Festanteils des Beschichtungsmittels; und
(d) mindestens ein organisches Lösungsmittel,
wobei der Anteil an ethylenisch ungesättigten Gruppen mindestens 3 mol pro kg des Festanteils des Beschichtungsmittels beträgt;
(ii) Trocknen der Beschichtung;
(iii) gegebenenfalls zurechtschneiden, dekaschieren, bedrucken und/oder thermisches oder mechanisches Verformen des Substrates;
(iv) Bestrahlen der Beschichtung mit aktinischer Strahlung, dabei Härten der Beschichtung.

11. Verfahren gemäß Anspruch 10, wobei die aktinische Strahlung Licht im UV-Bereich ist.

12. Verfahren gemäß Anspruch 10, wobei der Reaktivverdünner (b) bifunktionelle, trifunktionelle, tetrafunktionelle, pentafunktionelle oder hexafunktionelle Acryl- und/oder Methacrylmonomere umfasst.

13. Beschichtetes Substrat, erhältlich durch ein Verfahren, umfassend die Schritte
(i) Beschichten eines Substrates mit einer Zusammensetzung, umfassend
(a) mindestens ein thermoplastisches Polymer mit einem mittleren Molgewicht Mw, bestimmt durch Gelpermeationschromatographie, von mindestens 100.000 g/mol in einem Gehalt von mindestens 30 Gew.-% des Festanteils des Beschichtungsmittels;
(b) mindestens einen UV-härtbaren Reaktivverdünner in einem Gehalt von mindestens 30 Gew.-% des Festanteils des Beschichtungsmittels;
(c) mindestens einen Fotoinitiator in einem Gehalt von ≥ 0,1 bis ≤ 10 Gewichtsteilen des Festanteils des Beschichtungsmittels; und
(d) mindestens ein organisches Lösungsmittel,
wobei der Anteil an ethylenisch ungesättigten Gruppen mindestens 3 mol pro kg des Festanteils des Beschichtungsmittels beträgt;
(ii) Trocknen der Beschichtung;
(iii) gegebenenfalls zurechtschneiden, dekaschieren, bedrucken und/oder thermisches oder mechanisches Verformen des Substrates; und
(iv) Bestrahlen der Beschichtung mit aktinischer Strahlung, dabei Härten der Beschichtung.

14. Beschichtetes Substrat gemäß Anspruch 13, wobei das Substrat eine Folie umfasst.

15. Beschichtetes Substrat gemäß Anspruch 13 oder Anspruch 14, wobei das Substrat eine Polycarbonatfolie oder eine coextrudierte Folie aus Polycarbonat und Polymethylmethacrylat umfasst.

## Claims

1. Coating composition comprising
(a) at least one thermoplastic polymer having a mean molar mass Mw, determined by gel permeation chromatography, of at least 100 000 g/mol in a content of at least 30% by weight of the solids content of the coating composition;
(b) at least one UV-curable reactive diluent in a content of at least 30% by weight of the solids content of the coating composition;
(c) at least one photoinitiator in a content of ≥ 0.1 to ≤ 10 parts by weight of the solids content of the coating composition; and
(d) at least one organic solvent,
where the proportion of ethylenically unsaturated groups is at least 3 mol per kg of the solids content of the coating composition.

2. Coating composition according to Claim 1, wherein the at least one thermoplastic polymer has a Vicat softening temperature VET to ISO 306 of at least 90°C.

3. Coating composition according to Claim 1 or Claim 2, wherein the at least one thermoplastic polymer is selected from the group consisting of polymethylmethacrylate, polyesters such as, more particularly, polybutylene terephthalate, polyethylene naphthalate, polybutylene terephthalate, unsaturated polyester resins, rigid PVC, cellulose esters such as CA, CAB, CP, polystyrene and copolymers such as SAN, SB and MBS, polyacrylonitrile (PAN), ABS polymers, acrylonitrile-methyl methacrylate (AMMA), acrylonitrile-styrene-acrylic ester (ASA), polyurethane (PUR), polyethylene (PE, PE-HD, -LD,-LLD, -C), polypropylene (PP), polyamide (PA), polycarbonate (PC) or polyether sulphone (PES).

4. Coating composition according to Claim 3, wherein the thermoplastic polymer comprises PMMA homopolymers and/or copolymers of 70% by weight to 99.5% by weight of methyl methacrylate and 0.5% by weight to 30% by weight of methyl acrylate.

5. Coating composition according to at least one of the preceding claims, wherein the reactive diluent (b) comprises bifunctional, trifunctional, tetrafunctional, pentafunctional or hexafunctional acrylic and/or methacrylic monomers.

6. Coating composition according to at least one of the preceding Claims 1 to 5, wherein component (b) comprises alkoxylated diacrylates and/or dimethacrylates, alkoxylated triacrylates and/or trimethacrylates, alkoxylated tetraacrylates and/or tetramethacrylates, alkoxylated pentaaacrylates and/or pentamethacrylates, alkoxylated hexaacrylates and/or hexamethacrylates, aliphatic urethane acrylates, polyester acrylates, polyacryloylacrylates and mixtures thereof.

7. Coating composition according to at least one of the preceding claims, wherein the solvent is selected from ethanol, i-propanol, butanol, ethyl acetate, butyl acetate, 1-methoxy-2-propanol, diacetone alcohol, xylene, toluene, and mixtures thereof.

8. Process for producing a coating composition, comprising the dissolving of components (a), (b), and (c) in the at least one solvent, with simultaneous dissolution of (a), (b) and (c), or dissolution first of (a) and then dissolution of (b) and/or (c), or separate dissolution of (a), (b) and (c) in at least one solvent and then combination of the solutions.

9. Process according to Claim 8, wherein first (a) is dissolved while heating in at least one solvent and then (b) and (c) are added thereto.

10. Process for producing a protective layer, comprising the steps of
(i) coating a substrate selected from the group consisting of plastics parts, polymer films, wood, paper and metal surfaces with a composition comprising
(a) at least one thermoplastic polymer having a mean molar mass Mw, determined by gel permeation chromatography, of at least 100 000 g/mol in a content of at least 30% by weight of the solids content of the coating composition;
(b) at least one UV-curable reactive diluent in a content of at least 30% by weight of the solids content of the coating composition;
(c) at least one photoinitiator in a content of ≥ 0.1 to ≤ 10 parts by weight of the solids content of the coating composition; and
(d) at least one organic solvent,
where the proportion of ethylenically unsaturated groups is at least 3 mol per kg of the solids content of the coating composition;
(ii) drying the coating;
(iii) optionally cutting the substrate to size and/or delaminating, printing and/or thermally or mechanically forming the substrate;
(iv) irradiating the coating with actinic radiation to cure the coating.

11. Process according to Claim 10, wherein the actinic radiation is light in the UV range.

12. Process according to Claim 10, wherein the reactive diluent (b) comprises bifunctional, trifunctional, tetrafunctional, pentafunctional or hexafunctional acrylic and/or methacrylic monomers.

13. Coated substrate obtainable by a process comprising the steps of
(i) coating a substrate with a composition comprising
(a) at least one thermoplastic polymer having a mean molar mass Mw, determined by gel permeation chromatography, of at least 100 000 g/mol in a content of at least 30% by weight of the solids content of the coating composition;
(b) at least one UV-curable reactive diluent in a content of at least 30% by weight of the solids content of the coating composition;
(c) at least one photoinitiator in a content of ≥ 0.1 to ≤ 10 parts by weight of the solids content of the coating composition; and
(d) at least one organic solvent,
where the proportion of ethylenically unsaturated groups is at least 3 mol per kg of the solids content of the coating composition;
(ii) drying the coating;
(iii) optionally cutting the substrate to size and/or delaminating, printing and/or thermally or mechanically forming the substrate; and
(iv) irradiating the coating with actinic radiation to cure the coating.

14. Coated substrate according to Claim 13, wherein the substrate comprises a film.

15. Coated substrate according to Claim 13 or Claim 14, wherein the substrate comprises a polycarbonate film or a coextruded film of polycarbonate and polymethylmethacrylate.

## Revendications

1. Agent de revêtement, comprenant :
(a) au moins un polymère thermoplastique ayant un poids moléculaire moyen Mw, déterminé par chromatographie par perméation de gel, d'au moins 100 000 g/mol en une teneur d'au moins 30 % en poids de la fraction solide de l'agent de revêtement ;
(b) au moins un diluant réactif durcissable par UV en une teneur d'au moins 30 % en poids de la fraction solide de l'agent de revêtement ;
(c) au moins un photoinitiateur en une teneur de ≥ 0,1 à ≤ 10 parties en poids de la fraction solide de l'agent de revêtement ; et
(d) au moins un solvant organique,
la proportion de groupes éthyléniquement insaturés étant d'au moins 3 moles par kg de la fraction solide de l'agent de revêtement.

2. Agent de revêtement selon la revendication 1, dans lequel ledit au moins un polymère thermoplastique présente une température de ramollissement de Vicat VET selon ISO 306 d'au moins 90 °C.

3. Agent de revêtement selon la revendication 1 ou la revendication 2, dans lequel ledit au moins un polymère thermoplastique est choisi dans le groupe constitué par le polyméthacrylate de méthyle, les polyesters tels que notamment le polyéthylène téréphtalate, le polyéthylène naphtalate, le polybutylène téréphtalate, les résines de polyester insaturées, le PVC dur, les esters de cellulose tels que CA, CAB, CP, le polystyrène et les copolymères tels que SAN, SB et MBS, le polyacrylonitrile (PAN), les matières plastiques ABS, l'acrylonitrile-méthacrylate de méthyle (AMMA), l'acrylonitrile-styrène-ester acrylique (ASA), le polyuréthane (PUR), le polyéthylène (PE, PE-HD, -LD,-LLD, -C), le polypropylène (PP), le polyamide (PA), le polycarbonate (PC) ou la polyéther-sulfone (PES).

4. Agent de revêtement selon la revendication 3, dans lequel le polymère thermoplastique comprend des homopolymères de PMMA et/ou des copolymères de 70 % en poids à 99,5 % en poids de méthacrylate de méthyle et 0,5 % en poids à 30 % en poids d'acrylate de méthyle.

5. Agent de revêtement selon au moins l'une quelconque des revendications précédentes, dans lequel le diluant réactif (b) comprend des monomères acryliques et/ou méthacryliques bifonctionnels, trifonctionnels, tétrafonctionnels, pentafonctionnels ou hexafonctionnels.

6. Agent de revêtement selon au moins l'une quelconque des revendications 1 à 5 précédentes, dans lequel le composant (b) comprend des diacrylates et/ou diméthacrylates alcoxylés, des triacrylates et/ou triméthacrylates alcoxylés, des tétraacrylates et/ou tétraméthacrylates alcoxylés, des pentaacrylates et/ou pentaméthacrylates alcoxylés, des hexaacrylates et/ou hexaméthacrylates alcoxylés, des acrylates d'uréthane aliphatiques, des acrylates de polyester, des acrylates polyacryliques et des mélanges de ceux-ci.

7. Agent de revêtement selon au moins l'une quelconque des revendications précédentes, dans lequel le solvant est choisi parmi l'éthanol, l'i-propanol, le butanol, l'ester éthylique de l'acide acétique, l'ester butylique de l'acide acétique, le 1-méthoxy-2-propanol, l'alcool diacétonique, le xylène, le toluène, ainsi que leurs mélanges.

8. Procédé de fabrication d'un agent de revêtement, comprenant la dissolution des composants (a), (b) et (c) dans ledit au moins un solvant, (a), (b) et (c) étant dissous simultanément ou (a) étant dissous en premier, puis (b) et/ou (c) étant dissous, ou (a), (b) et (c) étant dissous séparément les uns des autres dans au moins un solvant, puis les solutions étant réunies.

9. Procédé selon la revendication 8, dans lequel (a) est tout d'abord dissous avec chauffage dans au moins un solvant, puis (b) et (c) sont ajoutés.

10. Procédé de fabrication d'une couche de protection, comprenant les étapes suivantes :
(i) le revêtement d'un substrat choisi dans le groupe constitué par les pièces en matière plastique, les films en matière plastique, le bois, le papier et les surfaces métalliques avec une composition, comprenant :
(a) au moins un polymère thermoplastique ayant un poids moléculaire moyen Mw, déterminé par chromatographie par perméation de gel, d'au moins 100 000 g/mol en une teneur d'au moins 30 % en poids de la fraction solide de l'agent de revêtement ;
(b) au moins un diluant réactif durcissable par UV en une teneur d'au moins 30 % en poids de la fraction solide de l'agent de revêtement ;
(c) au moins un photoinitiateur en une teneur de ≥ 0,1 à ≤ 10 parties en poids de la fraction solide de l'agent de revêtement ; et
(d) au moins un solvant organique,
la proportion de groupes éthyléniquement insaturés étant d'au moins 3 moles par kg de la fraction solide de l'agent de revêtement ;
(ii) le séchage du revêtement ;
(iii) éventuellement la découpe, le délaminage, l'impression et/ou la déformation thermique ou mécanique du substrat ;
(iv) l'exposition du revêtement à un rayonnement actinique, et ainsi le durcissement du revêtement.

11. Procédé selon la revendication 10, dans lequel le rayonnement actinique est dans la plage UV.

12. Procédé selon la revendication 10, dans lequel le diluant réactif (b) comprend des monomères acryliques et/ou méthacryliques bifonctionnels, trifonctionnels, tétrafonctionnels, pentafonctionnels ou hexafonctionnels.

13. Substrat revêtu, pouvant être obtenu par un procédé, comprenant les étapes suivantes :
(i) le revêtement d'un substrat avec une composition comprenant :
(a) au moins un polymère thermoplastique ayant un poids moléculaire moyen Mw, déterminé par chromatographie par perméation de gel, d'au moins 100 000 g/mol en une teneur d'au moins 30 % en poids de la fraction solide de l'agent de revêtement ;
(b) au moins un diluant réactif durcissable par UV en une teneur d'au moins 30 % en poids de la fraction solide de l'agent de revêtement ;
(c) au moins un photoinitiateur en une teneur de ≥ 0,1 à ≤ 10 parties en poids de la fraction solide de l'agent de revêtement ; et
(d) au moins un solvant organique,
la proportion de groupes éthyléniquement insaturés étant d'au moins 3 moles par kg de la fraction solide de l'agent de revêtement ;
(ii) le séchage du revêtement ;
(iii) éventuellement la découpe, le délaminage, l'impression et/ou la déformation thermique ou mécanique du substrat ; et
(iv) l'exposition du revêtement à un rayonnement actinique, et ainsi le durcissement du revêtement.

14. Substrat revêtu selon la revendication 13, dans lequel le substrat comprend un film.

15. Substrat revêtu selon la revendication 13 ou la revendication 14, dans lequel le substrat comprend un film de polycarbonate ou un film coextrudé de polycarbonate et de polyméthacrylate de méthyle.
